# DEMANDE DE BREVET EUROPEEN

(11) **EP 4 468 088 A1**
(43) Date de publication de la demande: **27.11.2024**
(21) Numéro de dépôt: 23175181.9
(22) Date de dépôt: 24.05.2023
(51) Int. Cl.: G04B 17/06, F16F 1/02

(54) **PROCÉDÉ DE TRAITEMENT D'UN SPIRAL POUR MOUVEMENT D'HORLOGERIE**

(71) Demandeur: Nivarox-FAR S.A., 2400 Le Locle (CH)
(72) Inventeur: MICHELET, Lionel, 1450 Sainte-Croix (CH); CHARBON, Christian, 2054 Chézard-St-Martin (CH); VERARDO, Marco, 2336 Les Bois (CH)
(74) Mandataire: ICB SA

(57) **Abrégé**

La présente invention concerne un procédé de traitement d'au moins un spiral destiné à équiper un mouvement horloger, ledit spiral étant réalisé dans un alliage Nb-Ti, le procédé comprenant une étape d'étuvage, dit climatique, dans une gamme de températures comprise entre 30 et 100°C au sein d'une atmosphère ayant une humidité relative comprise entre 60 et 99%.

## Description

### Domaine de l'invention

L'invention se rapporte à un procédé de traitement d'un spiral pour mouvement d'horlogerie. Elle se rapporte également au spiral issu de ce procédé de traitement.

### Arrière-plan de l'invention

L'existence de phénomènes de dérive de la fréquence d'un oscillateur balancier-spiral en fonction du temps est bien connue des horlogers.

Afin de réduire cette dérive, il est courant de réaliser un traitement d'étuvage qui consiste à chauffer les spiraux à une température comprise entre 100 et 250°C, pendant un temps compris entre 6 et 24h. L'étuvage a pour effet de restaurer la matière et également de permettre la diffusion et le réarrangement des éléments interstitiels, à savoir le carbone, l'azote et l'oxygène, ainsi que la stabilisation de la couche d'oxyde natif. Malgré l'étuvage, on observe toujours sur les spiraux réalisés dans un alliage de Nb-Ti une dérive de marche supérieure à 6s/j après un an.

### Résumé de l'invention

L'invention a pour objet de proposer un nouveau procédé de traitement du spiral qui permette de réduire la dérive de marche. Le procédé s'applique aux spiraux en alliage paramagnétique et en particulier aux spiraux en alliage Nb-Ti avec un pourcentage en poids de Ti compris entre 40 et 90%, de préférence entre 40 et 50%, par rapport au poids total de l'alliage.

Selon l'invention, le procédé de traitement du spiral comporte une étape d'étuvage, dit climatique, car l'étuvage est réalisé dans une atmosphère ayant un taux contrôlé d'humidité relative.

Plus précisément, l'invention se rapporte à un procédé de traitement d'au moins un spiral destiné à équiper un mouvement horloger, ledit spiral étant réalisé dans un alliage Nb-Ti, le procédé comprenant une étape d'étuvage, dit climatique, dans une gamme de températures comprise entre 30 et 100°C au sein d'une atmosphère ayant une humidité relative comprise entre 60 et 99%.

Des essais ont montré une nette réduction de la dérive de marche pour le spiral traité avec le procédé selon l'invention. Cette amélioration serait à attribuer à la création et croissance de différentes formes du TiO₂ à la surface du spiral avec l'humidité. Elle pourrait également être liée à la présence de molécules d'eau adsorbées à la surface du spiral.

La présente invention se rapporte également au spiral ayant pour caractéristique qu'après 5 mois d'utilisation à compter du moment où l'étape d'étuvage climatique a été réalisée, sa marche est inférieure ou égale à 3s/j.

D'autres caractéristiques et avantages de l'invention apparaîtront à la lecture de la description et de la figure ci-après.

### Brève description de la figure

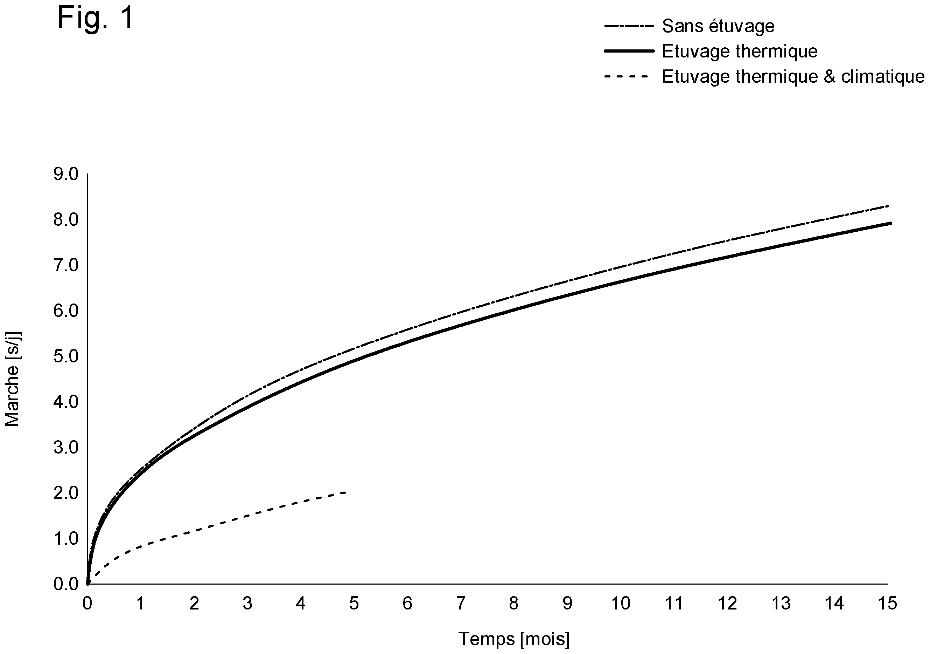

La figure 1 représente la marche (s/j) en fonction du temps (mois) pour un spiral traité selon le procédé de l'invention et, à titre comparatif, deux spiraux respectivement non traité ou traité avec le procédé standard d'étuvage.

### Description détaillée

L'invention concerne un procédé de traitement d'un spiral destiné à équiper un balancier d'un mouvement d'horlogerie.

Selon l'invention, le procédé de traitement peut être réalisé sur un spiral individuel ou en batch sur plusieurs spiraux. Il peut, par exemple, être réalisé sur une plaque comprenant plusieurs spiraux dans un barillet. Il peut également être réalisé sur un ensemble du mouvement horloger dans lequel le spiral est monté. A titre d'exemple, il pourrait s'agir d'un ensemble comprenant le spiral et la virole ou encore d'un ensemble formé de l'oscillateur qui comprend le balancier, le spiral, le plateau et l'axe.

Le spiral est réalisé dans un alliage paramagnétique et en particulier dans un alliage Nb-Ti. Cet alliage comporte entre 40 et 90% en poids de titane, des traces éventuelles d'un ou plusieurs éléments choisis parmi O, H, C, Fe, Ta, N, Ni, Si, Cu, Al, chacun desdits éléments étant compris entre 0 et 1600 ppm du total en poids, la balance à 100% étant constituée du niobium.

Selon l'invention, le procédé de traitement du spiral comporte une étape d'étuvage dans une gamme de températures comprise entre 30 et 100°C sous une atmosphère ayant une humidité relative comprise entre 60 et 99%. De préférence, la gamme de températures est comprise entre 40 et 80°C, plus préférentiellement entre 40 et 60°C. De préférence, l'humidité relative est comprise entre 70 et 97%, de préférence entre 85 et 95%, plus préférentiellement entre 87 et 95%. Toujours préférentiellement, les essais sont réalisés à pression ambiante. Il est également envisageable de réaliser les essais sous une pression partielle comprise entre 1 et 1000 mbar. Il est aussi envisageable de réaliser les essais avec une surpression, par exemple dans une marmite à vapeur, avec une pression comprise entre 1 et 5 bar. Différents temps de maintien sont possibles avec une gamme assez large allant de 10 minutes à 100 heures, le temps n'affectant pas notablement les résultats.

Le traitement d'étuvage climatique selon l'invention est, de préférence, précédé du traitement d'étuvage standard connu de l'art antérieur. Ce traitement d'étuvage standard est réalisé sous humidité ambiante à une température comprise entre 100 et 250°C. De préférence, il est réalisé pendant un temps compris entre 1 et 30 heures.

Le traitement d'étuvage standard et le traitement d'étuvage climatique sont réalisés après l'étape de fixage du spiral qui est un traitement thermique bien connu de l'homme de métier.

Ainsi, le procédé de fabrication du spiral selon l'invention comporte les étapes suivantes, avec les étapes a) à f) connues de l'homme du métier:
a) élaboration d'une ébauche réalisée dans un alliage Nb-Ti avec la composition chimique susmentionnée,
b) traitement de mise en solution et de trempe, dite de type bêta, de ladite ébauche, de façon à ce que le titane et le niobium soient essentiellement sous forme de solution solide en phase bêta,
c) application audit alliage de séquences de déformation avec optionnellement un ou plusieurs traitements thermiques. On entend par déformation une déformation par tréfilage et/ou laminage. Le tréfilage peut nécessiter l'utilisation d'une ou plusieurs filières lors d'une même séquence ou lors de différentes séquences si nécessaire. Le tréfilage est réalisé jusqu'à l'obtention d'un fil de section ronde. Le laminage peut être effectué lors de la même séquence de déformation que le tréfilage ou dans une autre séquence. Avantageusement, la dernière séquence appliquée à l'alliage est un laminage de préférence à profil rectangulaire compatible avec la section d'entrée d'une broche d'estrapadage,
d) estrapadage pour former un spiral,
e) traitement thermique final de fixage,
f) traitement optionnel d'étuvage standard,
g) traitement d'étuvage climatique selon l'invention.

La présente invention se rapporte également au spiral issu du procédé de traitement selon l'invention. Ce spiral présente pour caractéristiques de comporter à sa surface des oxydes de titane ainsi que potentiellement des molécules d'eau adsorbées. Il présente également pour caractéristique qu'après 5 mois d'utilisation suivant l'étape d'étuvage climatique sa marche est inférieure à 3s/j, voire à 2s/j.

Des essais ont été réalisés à la suite de l'étape d'étuvage climatique. Les résultats sont présentés à la figure 1 avec en ordonnée la marche exprimée en s/j, mesurée dans un équipement Witschi, Chronomaster à température ambiante, et en abscisse le temps exprimé en mois. Les tests ont été réalisés sur un spiral en alliage Nb-Ti avec un pourcentage en poids de Ti de 47%. Selon le procédé de l'invention, le spiral a été soumis à un étuvage standard conformément à l'étape f), réalisé à 150°C pendant 24h sous humidité ambiante, suivi d'un étuvage climatique selon l'étape g) dans une atmosphère comprenant 93% d'humidité relative sous pression ambiante à une température de 50°C pendant 4h. A titre comparatif, un spiral avec une même composition chimique mais n'ayant pas été soumis à un traitement selon l'étape f) ou g) a été testé. Un spiral avec une même composition chimique ayant été seulement soumis à l'étape f) d'étuvage standard pendant 24h à 150°C sous humidité ambiante a également été testé. On observe une nette réduction de la dérive de marche pour le spiral réalisé avec le procédé de traitement selon l'invention. Au bout de 5 mois, la marche est de l'ordre de 2s/j contre des valeurs de l'ordre de 5s/j pour les spiraux comparatifs.

## Revendications

1. Procédé de traitement d'au moins un spiral destiné à équiper un mouvement horloger, ledit spiral étant réalisé dans un alliage Nb-Ti, le procédé comprenant une étape d'étuvage, dit climatique, dans une gamme de températures comprise entre 30 et 100°C au sein d'une atmosphère ayant une humidité relative comprise entre 60 et 99%.

2. Procédé de traitement selon la revendication 1, **caractérisé en ce que** l'étape d'étuvage climatique est précédée d'une étape d'étuvage standard réalisée sous air ambiant dans une gamme de températures comprise entre 100 et 250°C.

3. Procédé de traitement selon l'une des revendications précédentes, **caractérisé en ce que** la gamme de températures est comprise entre 40 et 80°C, de préférence entre 40 et 60°C, pour l'étape d'étuvage climatique.

4. Procédé de traitement selon l'une des revendications précédentes, **caractérisé en ce que** l'humidité relative est comprise entre 70 et 97%, de préférence entre 85 et 95%, plus préférentiellement entre 87 et 95%.

5. Procédé de traitement selon l'une des revendications précédentes, **caractérisé en ce qu'**il est réalisé sous pression ambiante.

6. Procédé de traitement selon l'une des revendications 1 à 4, **caractérisé en ce qu'**il est réalisé sous une pression partielle comprise entre 1 et 1000 mbar ou en surpression avec une pression comprise entre 1 et 5 bar.

7. Procédé de traitement selon l'une des revendications 1 à 5, **caractérisé en ce que** ledit procédé est réalisé sous pression ambiante dans une atmosphère comprenant entre 87 et 95% d'humidité relative avec une température comprise entre 40 et 60°C.

8. Procédé de traitement selon l'une des revendications précédentes, **caractérisé en ce que** l'alliage Nb-Ti comporte du Ti avec un pourcentage en poids compris entre 40 et 90%, de préférence entre 40 et 50%, des traces éventuelles d'un ou plusieurs autres éléments choisis parmi O, H, C, Fe, Ta, N, Ni, Si, Cu et Al, chacun desdits éléments étant compris entre 0 et 1600 ppm du total en poids, la balance pour 100% étant constituée du Nb.

9. Procédé de traitement selon l'une des revendications précédentes, **caractérisé en ce qu'**il est réalisé sur un spiral individuel, sur plusieurs spiraux simultanément, y compris sur des spiraux au sein d'une plaque ou sur un spiral monté au sein d'un ensemble du mouvement horloger, le traitement étant respectivement appliqué sur ladite plaque ou sur ledit ensemble.

10. Procédé de traitement selon la revendication précédente, **caractérisé en ce que** l'ensemble comprend le spiral et une virole ou **en ce que** l'ensemble est formé d'un oscillateur qui comprend un balancier, le spiral, un plateau et un axe.

11. Procédé de fabrication d'au moins un spiral comportant une étape de fixage suivie du procédé de traitement selon l'une des revendications précédentes.

12. Spiral obtenu avec le procédé de fabrication selon la revendication 11, ledit spiral ayant pour caractéristique qu'après 5 mois d'utilisation à compter de l'étape d'étuvage climatique, sa marche est inférieure ou égale à 3s/j.
